(19) Europäisches Patentamt
European Patent Office
Office européen des brevets

(11) **EP 3 062 231 A1**

(12) **EUROPEAN PATENT APPLICATION**
published in accordance with Art. 153(4) EPC

(43) Date of publication:
**31.08.2016 Bulletin 2016/35**

(51) Int Cl.:
*G06F 13/00* (2006.01)   *H04M 11/00* (2006.01)

(21) Application number: **14855628.5**

(86) International application number:
**PCT/JP2014/003491**

(22) Date of filing: **01.07.2014**

(87) International publication number:
**WO 2015/059849 (30.04.2015 Gazette 2015/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.10.2013  JP 2013220077**

(71) Applicant: **NEC Corporation**
**Tokyo 108-8001 (JP)**

(72) Inventors:
- **INOUE, Tetsuo**
  **Tokyo 108-8001 (JP)**
- **YAMADA, Toru**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **COMMUNICATION SYSTEM, SHARED SERVICE CONTROL UNIT, DATA TRANSMISSION METHOD, AND NON-TRANSITORY COMPUTER-READABLE MEDIUM**

(57)     An object is to provide a communication system that can determine an update timing of accumulated data even when a device apparatus cannot determine the update timing. The communication system according to the present invention includes a common service control apparatus (30) and application servers (50) to (52). When a collection request message for requesting collection of data is transmitted from an application server (50) included in the application servers (50) to (52) to the common service control apparatus (30), the common service control apparatus (30) evaluates as to whether to transmit data collected before the collection request message is transmitted from the application server (50) or to transmit newly collected data to the application server (50).

Fig. 1

EP 3 062 231 A1

## Description

## Technical Field

The present invention relates to a common service control apparatus disposed between a plurality of application servers and a device apparatus.

## Background Art

Automatic data collection and control can be made possible by a device connected to a network autonomously transmitting detected data to a server apparatus and the like. Such a service is referred to as Machine-to-Machine (M2M), and an application of M2M has been attracting attention recently.

The server apparatus and the like can collect electricity usage data in real time via a network by, for example, connecting an electricity meter in each household and building to a network. Business operators collecting the electricity usage data use the data that are collected in the manner described above to provide services and the like for attempting optimization of power production.

As the M2M service has become widely used, it is necessary to consider a case in which a plurality of services or applications use data that has been detected by the same device. In order to efficiently realize such a case, installation of a common service platform that integrates functions common to the plurality of services and applications to promote entry of new services has been investigated.

When a plurality of applications refer to the data transmitted from the same device in this way, it is not preferable for the device to transmit the data to the applications every time they request the data as this will cause utilization of a network band to increase. It is therefore usual for the common service platform to include a function (cache) for temporarily accumulating data. When the most recent data is cached, the application will not request the device to transmit the data again but instead obtains the data from the cache. This reduces the utilization of the network band.

The utilization of the network band changes according to a timing at which the cache is updated. For example, when the cache is frequently updated, accuracy of the data can be ensured, however retransmission of the data frequently occurs, and thus the network utilization increases. When the update frequency of the cache is reduced, the network utilization is reduced but the accuracy of the data is sacrificed.

In order to solve such a problem, Japanese Unexamined Patent Application Publication No. 2003-259014 discloses a method for adding information indicating a retransmission condition when a device transmits data. A common service platform determines a data retransmission condition based on this information. In this method, the device determines the retransmission condition.

## Citation List

Patent Literature 1: Japanese Unexamined Patent Application Publication No. 2003-259014

## Summary of Invention

## Technical Problem

However, the data retransmission method disclosed in Japanese Unexamined Patent Application Publication No. 2003-259014 has a problem in which a device that does not support addition of the retransmission condition information cannot determine an update timing of accumulated data. On the other hand, there may be means for solving such a problem in which the means previously sets the data retransmission condition for each device in the common service platform. However, with this means for solving the problem, there will be another problem in which maintenance in accordance with a changing status of a communication environment will become difficult as the number of devices connected to the common service platform increases.

An object of the present invention is to provide a communication system, a common service control apparatus, a data transmission method, and a program that can determine an update timing of accumulated data even when a device apparatus (or a terminal apparatus) cannot determine the update timing of the accumulated data.

## Solution to Problem

A first aspect of the present invention is a communication system including: a common service control apparatus that collects data generated by a device apparatus, in which the device apparatus is connected to the common service control apparatus via a network; and a plurality of application servers that share the data and provide a service, in which the data is collected by the common service control apparatus. The common service control apparatus includes evaluation means for evaluating, when a collection request message that requests collection of the data is transmitted from a first application server that is included in the plurality of application servers to the common service control apparatus, as to whether to transmit the data collected from the device apparatus to the first application server before the collection request message is transmitted from the first application server based on the collection request message transmitted from any one of the plurality of application servers to the first application server or to collect the data from the device apparatus after the collection request message is transmitted from the first application server and then transmit the collected data to the first application server.

A second aspect of the present invention is a common service control apparatus including: a communication unit that receives a collection request message transmitted from any one of a plurality of connected application servers, in which the collection request message requests collection of data generated by a device apparatus, and the device apparatus is connected to the communication unit via a network; and an evaluation unit that evaluates, when the communication unit receives the collection request message transmitted from a first application server included in the plurality of application servers, as to whether to transmit the data collected from the device apparatus to the first application server before the collection request message is transmitted from the first application server based on the collection request message transmitted from any one of the plurality of application servers or to collect the data from the device apparatus after the collection request message is transmitted from the first application server and then transmit the collected data to the first application server.

A third aspect of the present invention is a data transmission method including steps of: receiving a collection request message transmitted from a first application server included in a plurality of connected application servers, in which the collection request message requests collection of data generated by a device apparatus, and the device apparatus is connected to the communication means via a network; and evaluating as to whether to transmit the data collected from the device apparatus to the first application server before the collection request message is transmitted from the first application server based on the collection request message transmitted from any one of the plurality of application servers or to collect the data from the device apparatus after the collection request message is transmitted from the first application server and then transmit the collected data to the first application server.

A fourth aspect of the present invention is a program for causing a computer to execute a process including: receiving a collection request message transmitted from a first application server included in a plurality of application servers, in which the application server are connected to the communication means, the collection request message requests collection of data generated by a device apparatus, and the device apparatus is connected to the communication means via a network; and evaluating as to whether to transmit the data collected from the device apparatus to the first application server before the collection request message is transmitted from the first application server based on the collection request message transmitted from any one of the plurality of application servers or to collect the data from the device apparatus after the collection request message is transmitted from the first application server and then transmit the collected data to the first application server.

## Advantageous Effects of Invention

According to the present invention, it is possible to provide a communication system, a common service control apparatus, a data transmission method, and a program that can determine an update timing of accumulated data even when a device apparatus (or a terminal apparatus) cannot determine the update timing of the accumulated data.

## Brief Description of Drawings

Fig. 1 is a configuration diagram of a communication system according to a first embodiment;
Fig. 2 is a configuration diagram of a common service control apparatus according to a second embodiment;
Fig. 3 is a drawing showing a flow of a data transmission process performed by the common service control apparatus according to the second embodiment;
Fig. 4 is a configuration diagram of a common service control apparatus according to a third embodiment;
Fig. 5 is a drawing showing a flow of a data input process according to the third embodiment;
Fig. 6 is a drawing showing a flow of a data transmission process performed by a device apparatus according to the third embodiment;
Fig. 7 is a drawing showing a flow of a process that transmits data to an application server performed by the common service control apparatus according to the third embodiment; and
Fig. 8 is a configuration diagram of a communication system according to a fourth embodiment.

## Description of Embodiments

First embodiment

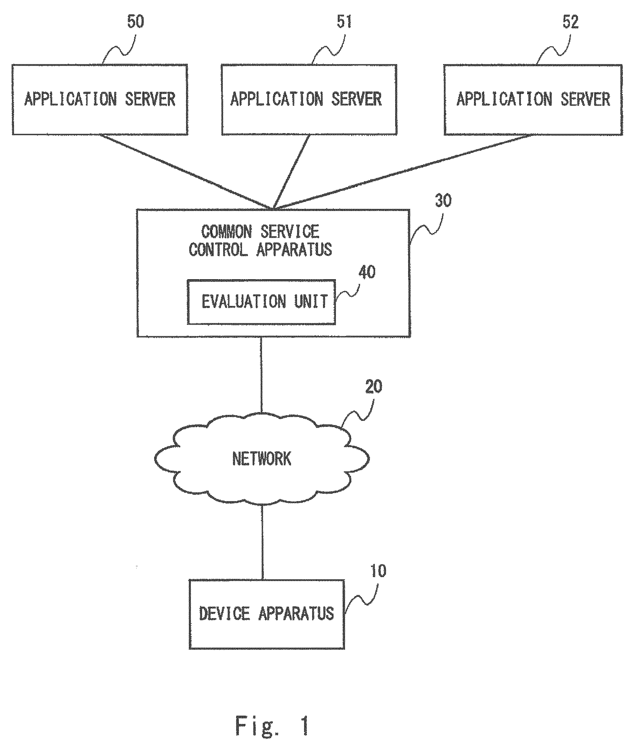

Hereinafter, embodiments of the present invention will be explained with reference to the drawings. A configuration example of a communication system according to a first embodiment of the present invention will be explained by referring to Fig. 1. The communication system shown in Fig. 1 includes a device apparatus 10, a common service control apparatus 30, and application servers 50 to 52. In Fig. 1, although a configuration in which the application servers 50 to 52 are included is illustrated, a configuration in which only the application server 50 is included may be applied. Alternatively, three or more application servers may be included. The device apparatus 10 and the common service control apparatus 30 are connected via a network 20. The common service control apparatus 30 includes an evaluation unit 40.

The common service control apparatus 30 collects data generated by the device apparatus 10. The common service control apparatus 30 may be a platform that operates software or a plurality of functions mounted on the common service control apparatus 30 and may be referred to as a common service platform. The common service control apparatus 30 may be a computer apparatus such as a server apparatus or the like.

The device apparatus 10 may be a sensor apparatus or an M2M terminal apparatus used in the M2M service. The sensor apparatus may be, for example, an apparatus that detects changes in an external environment such as a temperature, humidity and the like. The M2M terminal apparatus may be, for example, a communication apparatus that autonomously transmits data without requiring user operations such as a communication apparatus that autonomously transmits sales of an automatic vending machine to the server apparatus.

The application servers 50 to 52 share the data collected by the common service control apparatus 30. The application servers 50 to 52 provide application services. The application servers 50 to 52 use the data collected by the common service control apparatus 30 from the device apparatus 10 when the application servers 50 to 52 provide the application services. Sharing of the data by the application servers 50 to 52 indicates that the data collected from the same device apparatus 10 can be used by each of the application servers 50 to 52.

Next, the evaluation unit 40 included in the common service control apparatus 30 will be explained. The evaluation unit 40 operates as follows when a collection request message for requesting the collection of the data in the device apparatus 10 is transmitted from, for example, the application server 50 from among the application servers 50 to 52.

The evaluation unit 40 evaluates as to whether to transmit the data currently accumulated in the common service control apparatus 30 to the application server 50 or to transmit data newly collected from the device apparatus 10 to the application server 50. The data accumulated in the common service control apparatus 30 may be data collected before the collection request message is transmitted from the application server 50 based on the collection request message transmitted from any one of the application servers 50 to 52. Alternatively, the data accumulated in the common service control apparatus 30 may be data autonomously transmitted from the device apparatus 10.

The data newly collected from the device apparatus 10 is data collected by the common service control apparatus 30 from the device apparatus 10 after the collection request message is transmitted from the application server 50.

As has been explained above, in the communication system shown in Fig. 1, the evaluation unit 40 of the common service control apparatus 30 can determine the data to be transmitted to the application server 50. That is, the evaluation unit 40 can determine as to whether to update the data already held and transmit new data to the application server 50 or to transmit the data already held to the application server 50.

Further, in Fig. 1, although a configuration in which only one device apparatus 10 is connected to the network 20 has been explained, a plurality of the device apparatuses 10 may be connected to the network 20. In such a case, a gateway apparatus that integrates the plurality of device apparatuses 10 may be provided, and the common service control apparatus 30 may collect the data from the device apparatuses 10 through the gateway apparatus.

Then, in the network where the data held in the common service control apparatus 30 is shared by the plurality of application servers, the common service control apparatus 30 can determine an update timing of the data held therein. Therefore, even when the device apparatuses 10 cannot determine the update timing of the data accumulated in the common service control apparatus 30, the common service control apparatus 30 can determine the update timing of the data. Thus, the application servers can receive updated data or data before it is updated that has been evaluated by the common service control apparatus 30 even when the device apparatuses 10 cannot determine the update timing of the data.

Second embodiment

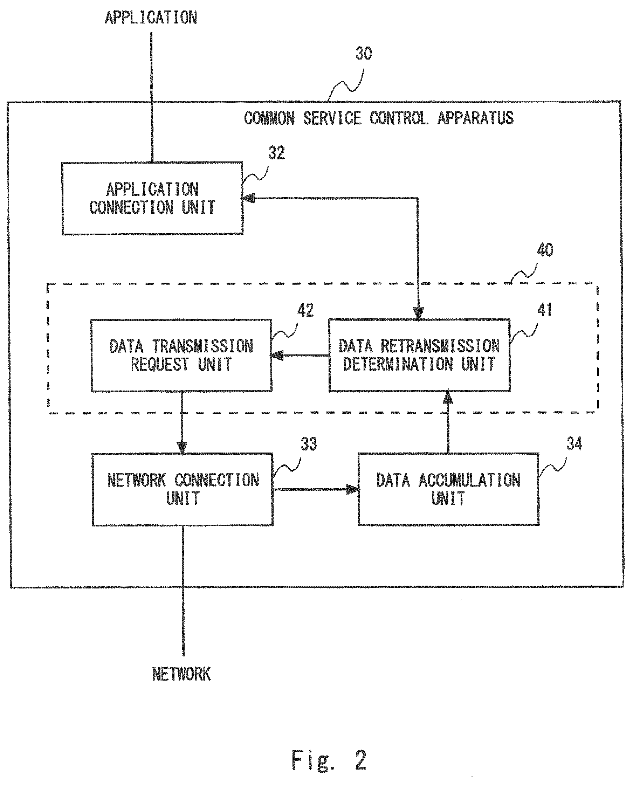

Next, a configuration example of the common service control apparatus 30 according to a second embodiment of the present invention will be explained by referring to Fig. 2. The common service control apparatus 30 includes an application connection unit 32, a network connection unit 33, a data accumulation unit 34, and the evaluation unit 40. The evaluation unit 40 includes a data retransmission determination unit 41 and a data transmission request unit 42.

The application connection unit 32 is connected to the application servers 50 to 52 to perform communication with the application servers 50 to 52. For example, a common interface may be set between the application connection unit 32 and the application servers 50 to 52. By setting the common interface in this way, various application servers managed by different administrators can be connected to the common service control apparatus 30. Thus, the plurality of application servers that provide various services can be connected to the common service control apparatus 30. The application server that provides the M2M service may be referred to as an M2M application server.

The network connection unit 33 is connected to the network 20. The network 20 may be, for example, a public IP network such as the Internet. Alternatively, the network 20 may be an intranet or the like managed by a company and the like. Further, the network 20 may be a mobile communication network defined by 3GPP and the like. The network 20 may use wireless lines such as wireless LAN and the like for connections to the device apparatus 10 or the network connection unit 33.

As described above, the common service control apparatus 30 is connected to the application servers 50 to 52 using the application connection unit 32 and connected to the network 20 using the network connection unit 33 to thereby relay the communication between the device apparatus 10 and the application servers 50 to 52. That is, the common service control apparatus 30 can collect data detected by the device apparatus 10 and transmit the collected data to the application servers 50 to 52.

The network connection unit 33 outputs the data collected from the device apparatus 10 to the data accumulation unit 34. The data accumulation unit 34 may be a memory or the like that is provided inside the common service control apparatus 30 as a computer apparatus, an information recording medium, a hard disk apparatus or the like that is externally provided for the common service control apparatus 30.

The application connection unit 32 receives the collection request message for requesting the collection of the data from the device apparatus 10, in which the collection request message has been transmitted from, for example, the application server 50 from among the application servers 50 to 52. The application connection unit 32 outputs the received collection request message to the data retransmission determination unit 41.

When the application server 50 requests the collection of the data generated by the device apparatus 10, the data retransmission determination unit 41 determines as to whether to transmit the data currently accumulated in the data accumulation unit 34 to the application server 50 or to newly collect data from the device apparatus 10 and transmit the newly collected data to the application server 50. When the data retransmission determination unit 41 determines to newly collect data from the device apparatus 10 and transmit the newly collected data to the application server 50, the data retransmission determination unit 41 outputs contents of the determination to the data transmission request unit 42.

The data transmission request unit 42 transmits a message for requesting retransmission of the data to the device apparatus 10 via the network connection unit 33 and the network 20. In response to the message for requesting the retransmission of the data, the device apparatus 10 transmits generated or detected data to the network connection unit 33 via the network 20. When the network connection unit 33 receives the data transmitted from the device apparatus 10, the network connection unit 33 outputs the received data to the data accumulation unit 34 and updates the data accumulation unit 34.

A process performed by the data retransmission determination unit 41 for determining the data to be transmitted to the application server 50 will be explained below. The data retransmission determination unit 41 may determine the data to be transmitted to the application server 50 according to, for example, a last updated time of the data accumulation unit 34, a price paid by a business operator who manages the application server 50 to a business operator who manages the common service control apparatus 30, a congestion state of the network 20 or the like. Alternatively, when the device apparatus 10 transmits information related to an amount of change in data generated by the corresponding device apparatus 10 to the common service control apparatus 30, the data retransmission determination unit 41 may determine data to be transmitted to the application server 50 according to the amount of change in the data generated by the device apparatus 10.

Criteria for determining the data to be transmitted to the application server 50 will be explained in more detail below. An example in which the last updated time of the data accumulation unit 34 is used will be explained as follows. When a time interval between the last updated time of the data accumulation unit 34 and a time when the collection request message transmitted from the application server 50 is received this time is shorter than a predetermined threshold, the data retransmission determination unit 41 may transmit the data currently accumulated in the data accumulation unit 34 to the application server 50. When the time interval between the last updated time of the data accumulation unit 34 and the time when the collection request message transmitted from the application server 50 is received this time is longer than the predetermined threshold, the data retransmission determination unit 41 may determine to newly collect data from the device apparatus 10 and transmit the newly collected data from the device apparatus 10 to the application server 50.

Alternatively, instead of using the updated time of the data accumulation unit 34, the data retransmission determination unit 41 may use a time when the data collection request message is received from any one of the application servers 50 to 52 last time. That is, the data retransmission determination unit 41 may use a time interval between a time when the data collection request message is received last time and a time when the data collection request message is received this time in order to determine the data to be transmitted to the application server 50.

Further, the data retransmission determination unit 41 may use information related to a time when the device apparatus 10 detects the data. The information related to the time when the device apparatus 10 detects the data is used, for example, in a case in which a time when the common service control apparatus 30 collects the data has passed a predetermined time from the time when the device apparatus 10 detects the data.

An example in which a price is paid by the business operator who manages the application server 50 to the business operator who manages the common service control apparatus 30 is used will be explained as follows. When the business operator who manages the application server 50 pays a price that is lower than a predetermined amount of money to the business operator who manages the common service control apparatus 30 or when the business operator who manages the application server 50 pays a price that is lower than the predetermined amount of money to use the network 20, the data retransmission determination unit 41 may transmit the data currently accumulated in the data accumulation unit 34 to the application server 50. The business operator who manages the application server 50 pays a price that is higher than the predetermined amount of money, and then the data retransmission determination unit 41 determines to newly collect data from the device apparatus 10 and transmit the newly collected data from the device apparatus 10 to the application server 50.

An example in which the congestion state of the network 20 is used will be explained as follows. When a processing load on the network 20 is higher than a predetermined threshold, the data retransmission determination unit 41 may transmit the data currently accumulated in the data accumulation unit 34 to the application server 50. When the processing load on the network 20 is lower than the predetermined threshold, the data retransmission determination unit 41 determines to newly collect data from the device apparatus 10 and transmit the newly collected data from the device apparatus 10 to the application server 50.

The processing load on the network 20 may be, for example, information related to a processing load, a throughput or the like of a node apparatus constituting the network 20. The data retransmission determination unit 41 may periodically obtain the information related to the processing load via the network connection unit 33 from the node apparatus constituting the network 20 or the data retransmission determination unit 41 may collect the information related to the processing load from the node apparatus constituting the network 20 when the collection request message is obtained from the application server 50.

An example in which the amount of data change is used will be explained as follows. When there is no change in the data generated or detected by the device apparatus 10 or when the amount of data change is smaller than a predetermined threshold, the data retransmission determination unit 41 may transmit the data currently accumulated in the data accumulation unit 34 to the application server 50. When the amount of change in the data generated or detected by the device apparatus 10 is greater than the predetermined threshold, the data retransmission determination unit 41 determines to newly collect data from the device apparatus 10 and transmit the newly collected data from the device apparatus 10 to the application server 50. When the device apparatus 10 is a temperature sensor for detecting temperatures, the amount of data change may be, for example, a value indicating a difference in temperatures. Alternatively, the amount of data change may be information related to a difference between two or more data pieces detected by the device apparatus 10.

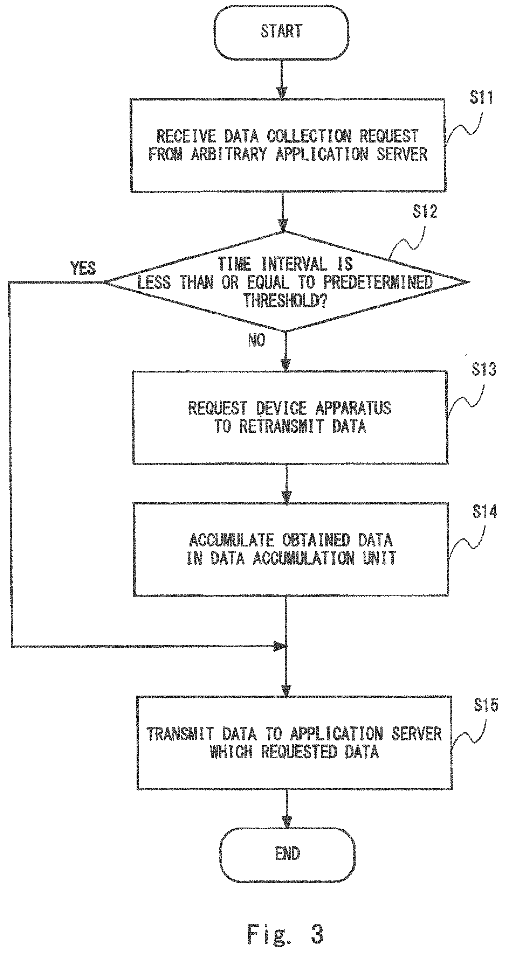

Next, a flow of a data transmission process performed by the common service control apparatus 30 according to the second embodiment of the present invention will be explained by referring to Fig. 3. A process for evaluating the data to be transmitted using the time interval between the last updated time of the data accumulation unit 34 and the time when the collection request message transmitted from the application server 50 is received this time will be explained by referring to Fig. 3.

Firstly, the application connection unit 32 receives the data collection request message related to the device apparatus 10 from, for example, the application server 50 as an arbitrary application server "(S11). Next, the data retransmission determination unit 41 evaluates as to whether or not the time interval between the updated time of the data accumulation unit 34 and the time when the collection request message transmitted from the application server 50 is received this time is less than or equal to a predetermined threshold (S 12).

When the data retransmission determination unit 41 evaluates that the time interval between the updated time of the data accumulation unit 34 and the time when the collection request message transmitted from the application server 50 is received this time is less than or equal to the predetermined threshold, the processes from the step S15 onward are executed. When the data retransmission determination unit 41 evaluates that the time interval between the updated time of the data accumulation unit 34 and the time when the collection request message transmitted from the application server 50 is received this time is greater than the predetermined threshold, the data transmission request unit 42 transmits a message for requesting retransmission of the data to the device apparatus 10 (S13).

Next, in response to the message for requesting the retransmission of the data, the network connection unit 33 accumulates the data transmitted from the device apparatus 10 in the data accumulation unit 34 (S14). Next, the data retransmission determination unit 41 transmits the data accumulated in the data accumulation unit 34 to the application server 50 which has sent the data collection request message (S15).

Although a flow of the process using the updated time of the data accumulation unit 34 has been explained by referring to Fig. 3, the common service control apparatus 30 may execute the processes using information other than the update time of the data accumulation unit 34.

In the step S12, for example, the data retransmission determination unit 41 may evaluate as to whether or not the price paid by the business operator who manages the application server 50 to the business operator who manages the common service control apparatus 30 is less than or equal to a predetermined amount of money. Moreover, in the step S12, the data retransmission determination unit 41 may evaluate as to whether or not the processing load on the network 20 is less than or equal to the predetermined threshold. Further, in the step S12, the data retransmission determination unit 41 may evaluate as to whether or not the amount of data change sent from the device apparatus 10 is less than or equal to the predetermined threshold.

As described above, by using the common service control apparatus 30 according to the second embodiment of the present invention, when the data collection request message for the device apparatus 10 is transmitted from the application servers 50 to 52 to the common service control apparatus 30, the common service control apparatus 30 can evaluate as to whether or not to retransmit the data from the device apparatus 10 via the network 20. Therefore, as the data is not necessarily retransmitted from the device apparatus 10 via the network 20, the processing load on the network 20 can be reduced.

Furthermore, the common service control apparatus 30 executes the process that evaluates the data to be transmitted to the application server 50 using the last updated time of the data accumulation unit 34 and the like. It is therefore possible to determine as to whether or not to update the data accumulation unit 34 in consideration of an intention of the business operator who manages the application server 50 or a communication environment and the like of the network 20.

Third embodiment

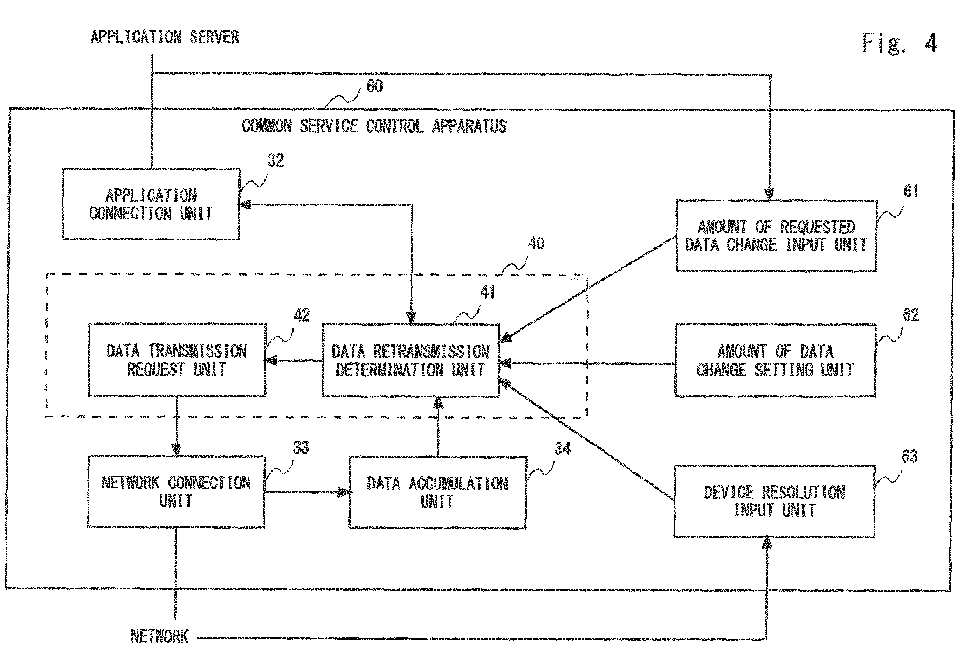

Next, a configuration example of a common service control apparatus 60 according to a third embodiment of the present invention will be explained by referring to Fig. 4. The common service control apparatus 60 has the same configuration as that of the common service control apparatus 30 shown in Fig. 2 and further includes an amount of requested data change input unit 61, an amount of data change setting unit 62, and a device resolution input unit 63. The same components as those of the common service control apparatus 30 shown in Fig. 2 will not be explained in detail. In this embodiment, when the detected data includes a predetermined amount of change, the device apparatus 10 autonomously transmits the detected data to the common service control apparatus 60. The application server 50 obtains the data transmitted to the common service control apparatus 60 and provides services.

The amount of requested data change input unit 61 receives, from the application server 50, information related to an amount of requested data change n when the application server 50 provides the services. The amount of data change n is an amount of change in the data requested from the device apparatus 10 for the application server 50 to provide the services. That is, when the device apparatus 10 detects data having the amount of data change that is greater than or equal to n, the application server 50 requests the device apparatus 10 to transmit the detected data to the common service control apparatus 60. The amount of requested data change input unit 61 holds the information related to the amount of data change n and also outputs the information related to the amount of data change n to the data retransmission determination unit 41.

The device resolution input unit 63 receives information related to resolution N that can be detected by the device apparatus 10 from the device apparatus 10. The resolution N indicates capability of the device apparatus 10 to detect the amount of data change. The resolution N may be, for example, a minimum value of the amount of data change that can be detected by the device apparatus 10. The device resolution input unit 63 holds the information related to the resolution N and outputs the information related to the resolution N to the data retransmission determination unit 41.

The amount of data change setting unit 62 has a threshold $\pm K$ that is used to cause the device apparatus 10 to autonomously transmit the data to the device apparatus 10. For example, when the amount of data change exceeds $\pm K$, the common service control apparatus 60 requests the device apparatus 10 to autonomously transmit the data to the common service control apparatus 60. A value sent from the application server 50 may be set for the threshold $\pm K$, or a value input by an administrator or the like who manages the common service control apparatus 60 may be set for the threshold $\pm K$. The amount of data change setting unit 62 holds the threshold $\pm K$ and outputs the threshold $\pm K$ to the data retransmission determination unit 41.

When the application server 50 transmits the data collection request message to the device apparatus 10, the data retransmission determination unit 41 evaluates as to whether to transmit the data currently accumulated in the data accumulation unit 34 to the application server 50 or to newly obtain data from the device apparatus 10 and transmit the obtained data to the application server 50 based on the information on the amount of data change n, the resolution N, and the threshold $\pm K$.

When, for example, $n \geq N$ and $K > n$ (hereinafter referred to as a condition 1) is satisfied, the data retransmission determination unit 41 determines to newly obtain the data from the device apparatus 10, while when the condition 1 is not satisfied, the data retransmission determination unit 41 determines to transmit the data currently accumulated in the data accumulation unit 34 to the application server 50. A process of the evaluation performed by the data retransmission determination unit 41 will be explained in detail below. There are the following conditions including the above-mentioned condition 1 as conditions when the amount of data change n, the resolution N, and the threshold $\pm K$ are used.

$$\text{Condition 1: } n \geq N \text{ and } K > n$$

$$\text{Condition 2: } n < N \text{ and } K > n$$

Condition 3: n≥N and K≤n

Condition 4: n<N and K≤n

In the above conditions, n≥N indicates that the device apparatus 10 can detect every amount of data change n. On the other hand, n<N indicates that the device apparatus 10 cannot detect the amount of data change n that does not exceed N.

Further, K>n indicates that when the device apparatus 10 detects the amount of data change n, and the amount of data change n does not exceed the threshold K, the device apparatus 10 does not autonomously transmit the data to the common service control apparatus 60. On the other hand, K≤n indicates that when the device apparatus 10 detects the amount of data change n, the device apparatus 10 autonomously transmits the data to the common service control apparatus 60.

The case in which the condition 1 is satisfied is one where the device apparatus 10 detects every amount of data change n, but when the amount of data change n does not exceed the threshold K, the detected data may not have been transmitted to the common service control apparatus 60. Therefore, when the condition 1 is satisfied, the data retransmission determination unit 41 determines to newly obtain the data from the device apparatus 10.

When the condition 3 is satisfied, the device apparatus 10 detects every amount of data change n. Further, as K≤n, when the device apparatus 10 detects the amount of data change n, the device apparatus 10 definitely transmits data autonomously to the common service control apparatus 60. Therefore, when the condition 3 is satisfied, the data retransmission determination unit 41 assumes that the data currently accumulated in the data accumulation unit 34 is the latest data and determines to transmit the data currently accumulated in the data accumulation unit 34 to the application server 50.

When the condition 2 is satisfied, as there is a value in which the device apparatus 10 cannot detect the amount of data n requested by the application server 50, a value of n is corrected to satisfy n≥N. As a result of the correction, since the condition 2 changes to the condition 1 or 3, the processes are performed in accordance with the above condition 1 or 3. As for the condition 4, in a manner similar to the above, the value of n is corrected to satisfy n≥N, and processes are performed in accordance with the corrected condition 3. When only the condition 1 or 3 is satisfied after the value of n is corrected, the evaluation can be made by only K>n or K≤n. However when the application 50 does not know the resolution N of the device apparatus 10 and requests the amount of data change n to satisfy n<N, the condition 2 may change to the condition 3 by the correction of the value of N, and thus the resolution N will need to be evaluated and the amount of data change n will need to be corrected.

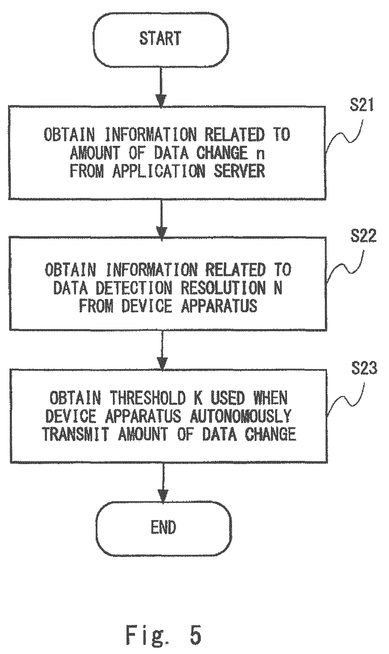

Next, a flow of a data input process according to a third embodiment of the present invention will be explained by referring to Fig. 5. Firstly, the amount of requested data change input unit 61 receives the information related to the amount of data change n transmitted from the application server 50 (S21).

Next, the device resolution input unit 63 receives the information related to the resolution N that can be detected by the device apparatus 10 from the device apparatus 10 (S22). Next, the amount of data change setting unit 62 receives the information related to the threshold ±K when the device apparatus 10 is caused to autonomously transmit the amount of data change (S23). The amount of data change setting unit 62 may set a value sent from the application server 50 for the threshold ±K or may set a value input by an administrator or the like who manages the common service control apparatus 60 for the threshold ±K.

Note that the order of processes in the steps S21 to S23 in Fig. 5 is not limited to the order of the steps S21, S22, and S23.

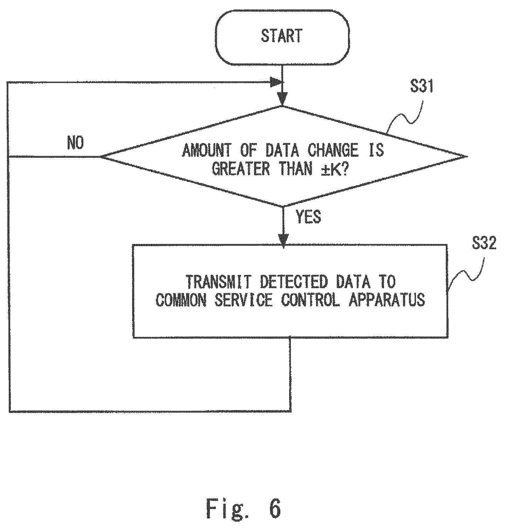

Next, a flow of a data transmission process performed by the device apparatus 10 according to the third embodiment of the present invention will be explained by referring to Fig. 6. The device apparatus 10 evaluates as to whether or not the amount of change in the detected data exceeds the threshold ±K (S31). When the device apparatus 10 evaluates that the amount of change in the detected data does not exceed the threshold ±K, the device apparatus 10 repeats the process of detecting the amount of data change.

When the device apparatus 10 evaluates that the amount of change in the detected data exceeds the threshold ±K, the device apparatus 10 transmits the detected data to the common service control apparatus 60 (S32). After the device apparatus 10 transmits the detected data to the common service control apparatus 60, the device apparatus 10 repeats the process of detecting the amount of data change.

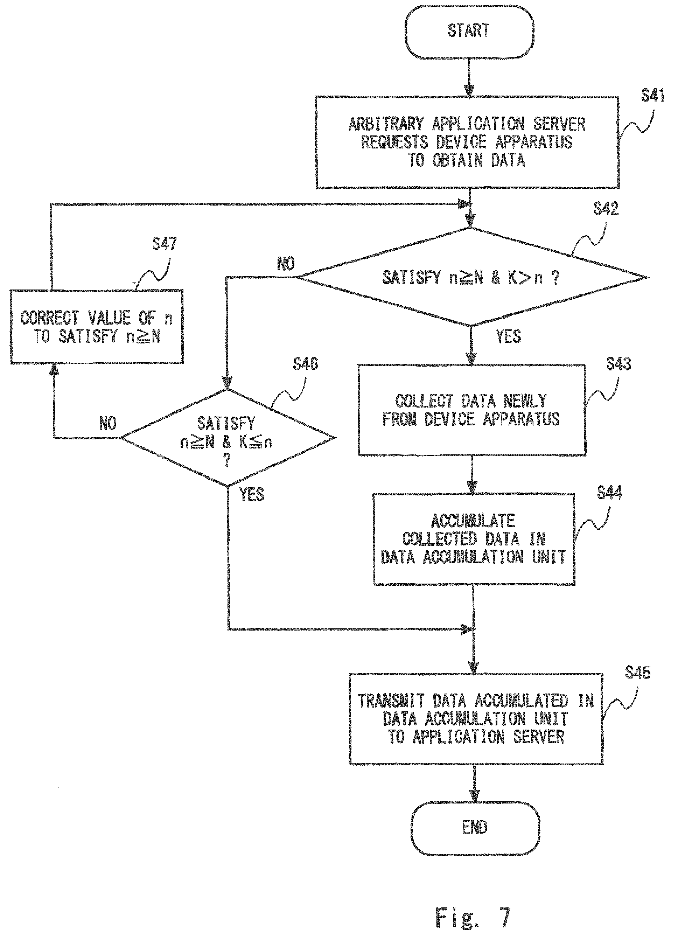

Next, a flow of a process when the common service control apparatus 60 according to the third embodiment of the present invention transmits the data to the application server will be explained by referring to Fig. 7.

Firstly, the application connection unit 32 obtains the message for requesting the collection of the data generated by the device apparatus 10 from an arbitrary application server (S41). The application server 50 is used as the arbitrary application server in the following explanation.

Next, the data retransmission determination unit 41 evaluates as to whether or not the amount of data change n requested by the application server 50, the data detection resolution N in the device apparatus 10, and the threshold K used by the device apparatus 10 to autonomously transmit the data satisfy n≥N and K>n (S42). When the data retransmission determination unit 41 determines that n≥N and K>n are satisfied, the data retransmission determination unit 41 performs control to newly collect data via the data transmission request unit 42 (S43).

Next, the network connection unit 33 accumulates the data newly collected from the device apparatus 10 in the data accumulation unit 34 (S44). Then, the data retransmission determination unit 41 transmits the data accumulated in the data accumulation unit 34 to the application server 50 (S45). Further, in the step S42, when the data retransmission determination unit 41 determines that n≥N and K>n are not satisfied, the processes in the steps S43 and S44 will not be performed, and the data retransmission determination unit 41 evaluates as to whether or not n≥N and K≤n are satisfied (S46). When the data retransmission determination unit 41 determines that n≥N and K≤n are satisfied, the process of the step S45 is executed. When the data retransmission determination unit 41 evaluates that n≥N and K≤n are not satisfied in the step S46, the value of n is corrected so that n≥N is satisfied (S47), and the process returns to the evaluation process of the step S42.

As described above, by using the common service control apparatus 60, when the device apparatus 10 autonomously transmits the detected data to the common service control apparatus 60, it is possible to evaluate as to whether or not the common service control apparatus 60 collects the data again from the device apparatus 10 in response to a collection request from the application server using the amount of data change n requested by the application 50, the data detection resolution N of the device apparatus 10, and the data change threshold K at the time of autonomous transmission.

Note that in the above explanation, a process in which the device apparatus 10 evaluates as to whether or not the amount of detected data change exceeds the threshold ±K has been explained. On the other hand, the common service control apparatus 60 may evaluate as to whether or not to transmit the data detected by the device apparatus 10 based on a size of the amount of change in the data detected by the device apparatus 10. That is, the common service control apparatus 60 may monitor the size of the amount of change in the data detected by the device apparatus 10 and determine when the device apparatus 10 should transmit the detected data. For example, the device apparatus 10 may transmit a signal indicating the size of the detected data change to the common service control apparatus 60, and the common service control apparatus 60 may evaluate as to whether or not to collect the data from the device apparatus 10 based on a size of the signal indicating the size of the amount of data change. The signal indicating the size of the amount of data change transmitted by the device apparatus 10 may be, for example, two patterns indicating as to whether there is a change or there is no change in the detected data or three patterns indicating a large, medium, and small amount of data change.

Fourth embodiment

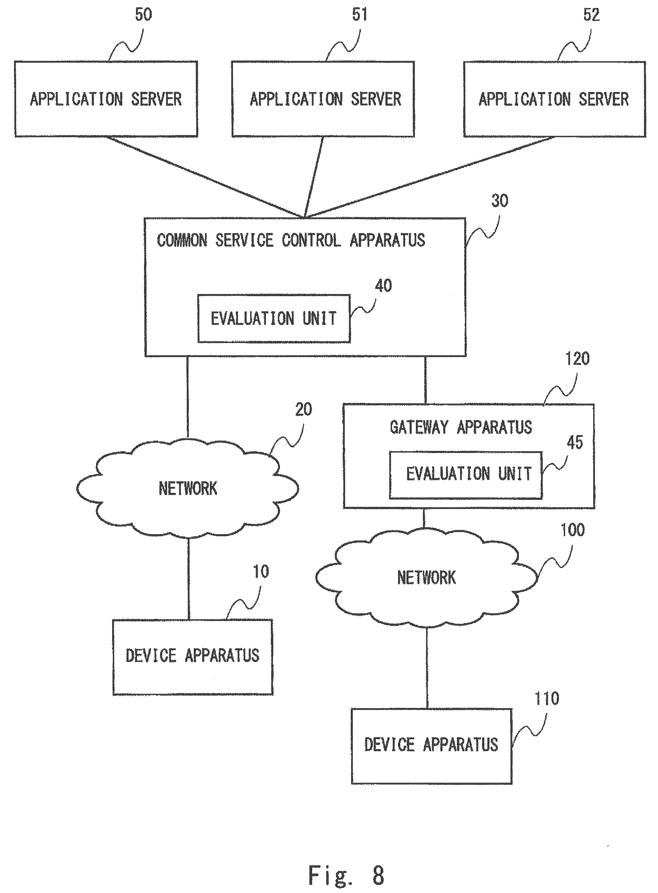

Next, a configuration example of a communication system according to a fourth embodiment of the present invention will be explained by referring to Fig. 8. The communication system shown in Fig. 8 has the same configuration as that of the communication system shown in Fig. 1 and further includes a network 100, a device apparatus 110, and a gateway apparatus 120. The network 100 is used to connect the device apparatus 110 and the gateway apparatus 120. The device apparatus 110 is similar to the device apparatus 10.

The gateway apparatus 120 collects data from the device apparatus 110. Further, the gateway apparatus 120 transmits the collected data to the common service control apparatus 30. The gateway apparatus 120 includes an evaluation unit 45.

The evaluation unit 45 executes the function and processes similar to those executed by the evaluation unit 40. That is, when the common service control apparatus 30 transmits the collection request message for requesting collection of data from the device apparatus 110, the evaluation unit 45 may evaluate as to whether to transmit the data currently accumulated to the common service control apparatus 30 or to transmit data newly collected from the device apparatus 110 to the common service control apparatus 30.

As described above, when the gateway apparatus 120 is disposed between the device apparatus 110 and the common service control apparatus 30, the gateway apparatus 120 may include the evaluation unit 45 that is similar to the evaluation unit 40. Moreover, although Fig. 8 shows a configuration in which only one device apparatus 110 is included, a plurality of the device apparatuses 110 may be connected to the network 100, and the gateway apparatus 120 may collect data from the plurality of device apparatuses 110.

Although in the above embodiments, the present invention is explained as a configuration of hardware, the present invention is not limited to this. The present invention can be realized by causing a CPU (Central Processing Unit) to execute a computer program for executing processes performed by the common control apparatus and the device apparatus.

In the above example, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Note that the present invention is not limited to the above-described embodiments, and modifications can be made as appropriate without departing from the scope thereof. The whole or part of the exemplary embodiments disclosed above can be described as, but not limited to, the following supplementary notes.

(Supplementary note 1)

A communication system comprising:

a common service control apparatus that collects data generated by a device apparatus, the device apparatus being connected to the common service control apparatus via a network; and
an application server that shares the data and provides a service, the data being collected by the common service control apparatus, wherein
the common service control apparatus includes evaluation means for evaluating, when a collection request message that requests collection of the data is transmitted from the application server to the common service control apparatus, as to whether to transmit the data collected from the device apparatus to the application server before the collection request message is transmitted from the application server or to collect the data from the device apparatus after the collection request message is transmitted from the application server and then transmit the collected data to the application server.

(Supplementary note 2)

The communication system according to Supplementary note 1, wherein
the evaluation means evaluates data to be transmitted to the application server based on information related to a time when the device apparatus detects the data collected before the collection request message is transmitted from the application server.

(Supplementary note 3)

The communication system according to Supplementary note 1, wherein
the evaluation means evaluates the data to be transmitted to the application server according to a charge generated for the application server along with the collection request from the application server.

(Supplementary note 4)

The communication system according to Supplementary note 1, wherein
the evaluation means evaluates the data to be transmitted to the application server according to a congestion state of the network.

(Supplementary note 5)

The communication system according to Supplementary note 1, wherein
the evaluation means evaluates the data to be transmitted to the application server according to an amount of data change between the data generated by the device apparatus and the previously generated data.

(Supplementary note 6)

The communication system according to Supplementary note 5, wherein
the evaluation means evaluates the data to be transmitted to the application server based on an amount of data change determined by the application server, an amount of data change in the data that can be detected by the device apparatus, and an amount of data change in the data used when the device apparatus autonomously transmits the data.

(Supplementary note 7)

The communication system according to any one of Supplementary notes 1 to 6, wherein
the common service control apparatus collects data generated by an M2M device apparatus and transmits the collected data to an M2M application apparatus that provides an M2M service.

(Supplementary note 8)

The communication system according to any one of Supplementary notes 1 to 7, wherein
the evaluation means evaluates as to whether to transmit the data collected based on the collection request message transmitted from any one of a plurality of the application servers before the collection request message is transmitted from a first application server included in the plurality of application servers to the first application server or to collect the data from the device apparatus after the collection request message is transmitted from the first application server and transmit the collected data to the first application server.

(Supplementary note 9)

A common service control apparatus comprising:

a communication unit that receives a collection request message transmitted from a connected application server, the collection request message requesting collection of data generated by a device apparatus, and the device apparatus being connected to the communication means via a network; and an evaluation unit that evaluates, when the communication means receives the collection request message, as to whether to transmit the data collected from the device apparatus to the application server before the collection request message is transmitted from the application server or to collect the data from the device apparatus after the collection request message is transmitted from the application server and then transmit the collected data to the application server.

(Supplementary note 10)

A data transmission method comprising steps of:

receiving a collection request message transmitted from a connected application server, the collection request message requesting collection of data generated by a device apparatus, and the device apparatus being connected to the communication means via a network; and evaluating as to whether to transmit the data collected from the device apparatus to the application server before the collection request message is transmitted from the application server or to collect the data from the device apparatus after the collection request message is transmitted from the application server and then transmit the collected data to the application server.

(Supplementary note 11)

A program for causing a computer to execute a process comprising:

receiving a collection request message transmitted from a connected application server, the collection request message requesting collection of data generated by a device apparatus, and the device apparatus being connected to the communication means via a network; and evaluating as to whether to transmit the data collected from the device apparatus to the application server before the collection request message is transmitted from the application server or to collect the data from the device apparatus after the collection request message is transmitted from the application server and then transmit the collected data to the application server.

Although the present invention has been explained by referring to the embodiments, the present invention is not limited by above. Various modifications, obvious to those skilled in the art, can be made to the configurations and details of the present invention within the scope of the invention

**Industrial Applicability**

The present application claims priority rights of and is based on Japanese Patent Application No. 2013-220077 filed on October 23, 2013 in the Japanese Patent Office, the entire contents of which are hereby incorporated by reference.

**Reference Signs List**

| 10 | DEVICE APPARATUS |
|---|---|
| 20 | NETWORK |
| 30 | COMMON SERVICE CONTROL APPARATUS |
| 32 | APPLICATION CONNECTION UNIT |
| 33 | NETWORK CONNECTION UNIT |
| 34 | DATA ACCUMULATION UNIT |
| 40 | EVALUATION UNIT |
| 41 | DATA RETRANSMISSION DETERMINATION UNIT |
| 42 | DATA TRANSMISSION REQUEST UNIT |
| 45 | EVALUATION UNIT |
| 50 | APPLICATION SERVER |
| 52 | APPLICATION SERVER |
| 54 | APPLICATION SERVER |
| 60 | COMMON SERVICE CONTROL APPARATUS |
| 61 | AMOUNT OF REQUESTED DATA CHANGE INPUT UNIT |
| 62 | AMOUNT OF DATA CHANGE SETTING UNIT |
| 63 | DEVICE RESOLUTION INPUT UNIT |
| 100 | NETWORK |
| 110 | DEVICE APPARATUS |
| 120 | GATEWAY APPARATUS |

**Claims**

1. A communication system comprising:

a common service control apparatus that collects data generated by a device apparatus, the device apparatus being connected to the common service control apparatus via a network; and an application server that shares the data and provides a service, the data being collected by the common service control apparatus, wherein

the common service control apparatus includes evaluation means for evaluating, when a collection request message that requests collection of the data is transmitted from the application server to the common service control apparatus, as to whether to transmit the data collected from the device apparatus to the application server before the collection request message is transmitted from the application server or to collect the data from the device apparatus after the collection request message is transmitted from the application server and then transmit the collected data to the application server.

2. The communication system according to Claim 1, wherein
the evaluation means evaluates data to be transmitted to the application server based on information related to a time when the device apparatus detects the data collected before the collection request message is transmitted from the application server.

3. The communication system according to Claim 1, wherein
the evaluation means evaluates the data to be transmitted to the application server according to a charge generated for the application server along with the collection request from the application server.

4. The communication system according to Claim 1, wherein
the evaluation means evaluates the data to be transmitted to the application server according to a congestion state of the network.

5. The communication system according to Claim 1, wherein
the evaluation means evaluates the data to be transmitted to the application server according to an amount of data change between the data generated by the device apparatus and the previously generated data.

6. The communication system according to Claim 5, wherein
the evaluation means evaluates the data to be transmitted to the application server based on an amount of data change determined by the application server, an amount of data change in the data that can be detected by the device apparatus, and an amount of data change in the data used when the device apparatus autonomously transmits the data.

7. The communication system according to any one of Claims 1 to 6, wherein
the common service control apparatus collects data generated by an M2M device apparatus and transmits the collected data to an M2M application apparatus that provides an M2M service.

8. A common service control apparatus comprising:

communication means for receiving a collection request message transmitted from a connected application server, the collection request message requesting collection of data generated by a device apparatus, and the device apparatus being connected to the communication means via a network; and
evaluation means for evaluating, when the communication means receives the collection request message, as to whether to transmit the data collected from the device apparatus to the application server before the collection request message is transmitted from the application server or to collect the data from the device apparatus after the collection request message is transmitted from the application server and then transmit the collected data to the application server.

9. A data transmission method comprising steps of:

receiving a collection request message transmitted from a connected application server, the collection request message requesting collection of data generated by a device apparatus, and the device apparatus being connected to a communication unit via a network; and
evaluating as to whether to transmit the data collected from the device apparatus to the application server before the collection request message is transmitted from the application server or to collect the data from the device apparatus after the collection request message is transmitted from the application server and then transmit the collected data to the application server.

10. A non-transitory computer readable medium storing a program for causing a computer to execute a process comprising:

receiving a collection request message transmitted from a connected application server, the collection request message requesting collection of data generated by a device apparatus, and the device apparatus being connected to a communication unit via a network; and
evaluating as to whether to transmit the data collected from the device apparatus to the application server before the collection request message is transmitted from the application server or to collect the data from the device apparatus after the collection request message is transmitted from the application server and then transmit the collected data to the application server.

50

APPLICATION SERVER

51

APPLICATION SERVER

52

APPLICATION SERVER

30

COMMON SERVICE
CONTROL APPARATUS

40

EVALUATION UNIT

20

NETWORK

10

DEVICE APPARATUS

Fig. 1

APPLICATION

30

COMMON SERVICE CONTROL APPARATUS

32

APPLICATION
CONNECTION UNIT

40

42

DATA TRANSMISSION
REQUEST UNIT

41

DATA RETRANSMISSION
DETERMINATION UNIT

33

NETWORK CONNECTION
UNIT

34

DATA ACCUMULATION
UNIT

NETWORK

Fig. 2

START

RECEIVE DATA COLLECTION REQUEST
FROM ARBITRARY APPLICATION SERVER — S11

TIME INTERVAL IS
LESS THAN OR EQUAL TO PREDETERMINED
THRESHOLD? — S12

YES

NO

REQUEST DEVICE APPARATUS
TO RETRANSMIT DATA — S13

ACCUMULATE OBTAINED DATA
IN DATA ACCUMULATION UNIT — S14

TRANSMIT DATA TO APPLICATION SERVER
WHICH REQUESTED DATA — S15

END

Fig. 3

APPLICATION SERVER

Fig. 4

COMMON SERVICE CONTROL APPARATUS — 60

- APPLICATION CONNECTION UNIT — 32
- AMOUNT OF REQUESTED DATA CHANGE INPUT UNIT — 61
- 40
- DATA TRANSMISSION REQUEST UNIT — 42
- DATA RETRANSMISSION DETERMINATION UNIT — 41
- AMOUNT OF DATA CHANGE SETTING UNIT — 62
- NETWORK CONNECTION UNIT — 33
- DATA ACCUMULATION UNIT — 34
- DEVICE RESOLUTION INPUT UNIT — 63

NETWORK

EP 3 062 231 A1

START

OBTAIN INFORMATION RELATED TO
AMOUNT OF DATA CHANGE n
FROM APPLICATION SERVER

S21

OBTAIN INFORMATION RELATED TO
DATA DETECTION RESOLUTION N
FROM DEVICE APPARATUS

S22

OBTAIN THRESHOLD K USED WHEN
DEVICE APPARATUS AUTONOMOUSLY
TRANSMIT AMOUNT OF DATA CHANGE

S23

END

Fig. 5

START

S31

NO ⟵ AMOUNT OF DATA CHANGE IS GREATER THAN ±K?

YES

S32

TRANSMIT DETECTED DATA TO COMMON SERVICE CONTROL APPARATUS

Fig. 6

START

S41
ARBITRARY APPLICATION SERVER
REQUESTS DEVICE APPARATUS
TO OBTAIN DATA

S42
SATISFY $n \geqq N$ & $K > n$ ?

S47
NO
CORRECT VALUE OF $n$
TO SATISFY $n \geqq N$

YES

S43
COLLECT DATA NEWLY
FROM DEVICE APPARATUS

S46
NO
SATISFY
$n \geqq N$ & $K \leqq n$
?
YES

S44
ACCUMULATE
COLLECTED DATA IN
DATA ACCUMULATION UNIT

S45
TRANSMIT DATA ACCUMULATED IN
DATA ACCUMULATION UNIT
TO APPLICATION SERVER

END

Fig. 7

19

Fig. 8

## INTERNATIONAL SEARCH REPORT

| International application No. |
|---|
| PCT/JP2014/003491 |

**A. CLASSIFICATION OF SUBJECT MATTER**
*G06F13/00(2006.01)i, H04M11/00(2006.01)i*

According to International Patent Classification (IPC) or to both national classification and IPC

**B. FIELDS SEARCHED**

Minimum documentation searched (classification system followed by classification symbols)
G06F13/00, H04M11/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-186903 A  (Fuji Electric Co., Ltd.),<br>22 September 2011 (22.09.2011),<br>paragraphs [0028] to [0030], [0032]<br>(Family: none) | 1,2,4,5,7-10<br>3,6 |
| Y<br>A | JP 2004-102743 A  (NEC Corp.),<br>02 April 2004 (02.04.2004),<br>paragraphs [0018] to [0019]<br>& US 2004/0064540 A1 | 1,2,4,5,7-10<br>3,6 |
| Y | JP 2013-069241 A  (Canon Inc.),<br>18 April 2013 (18.04.2013),<br>paragraphs [0039] to [0040]<br>(Family: none) | 4 |

☒ Further documents are listed in the continuation of Box C.        ☐ See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    03 September, 2014 (03.09.14) | Date of mailing of the international search report<br>    16 September, 2014 (16.09.14) |
|---|---|
| Name and mailing address of the ISA/<br>    Japanese Patent Office | Authorized officer |
| Facsimile No. | Telephone No. |

Form PCT/ISA/210 (second sheet) (July 2009)

21

**INTERNATIONAL SEARCH REPORT**

International application No.

PCT/JP2014/003491

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-522965 A  (Interdigital Patent Holdings, Inc.), 13 June 2013 (13.06.2013), paragraph [0002] & US 2013/0188515 A1    & EP 2545694 A & WO 2011/112683 A1    & AU 2011224415 A & CN 102907068 A        & KR 10-2013-0004497 A & MX 2012010363 A | 7 |
| A | JP 2002-312055 A  (Hitachi, Ltd.), 25 October 2002 (25.10.2002), paragraphs [0031] to [0033] (Family: none) | 3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003259014 A

- JP 2013220077 A